# EUROPEAN PATENT APPLICATION

(11) **EP 1 699 213 A1**
(43) Date of publication of application: **06.09.2006**
(21) Application number: 05257210.4
(22) Date of filing: 23.11.2005
(51) Int. Cl.: H04M 1/247, H04M 1/2745, G06F 3/033, H04M 1/725

(54) **Mobile communication device having automatic scrolling capability and method of operation thereof**

(30) Priority: 03.03.2005 US 70899
(71) Applicant: Agere Systems, Inc., Allentown, PA 18109 (US)
(72) Inventor: Landschaft, Assaf, Munich, 80538 (DE); Wohlstadter, Gal, Munich 81669 (DE); Wohlstadter, Gil, Munich 81669 (DE)
(74) Representative: Williams, David John

(57) **Abstract**

To enable a user of a mobile communication device to make a selection from a list of items with a minimum of input actions, a method for displaying information, in particular text information, on the display of a mobile communication device is introduced. The method calls for the display of the information to be automatically scrolled. A mobile communication device configured to carry out the method is also introduced.

## Description

### TECHNICAL FIELD OF THE PRESENT INVENTION

The present invention is directed, in general, to mobile communications and, more specifically, to a mobile communication device having automatic scrolling capability and method of operating the same to achieve automatic scrolling.

### BACKGROUND OF THE PRESENT INVENTION

As known, a mobile communication device, such as for example a mobile telephone, a PDA or a MDA, usually includes an operating menu with a predefined, often service-provider-specific menu structure according to which selectable operating functions or associated menu items are offered and ordered, such as for example handling messages, gaining access to the telephone book or adjusting the settings of the mobile communication device.

Usability researches show that users prefer to perform a given operation with a minimal number of keystrokes. This is especially the case for mobile communication devices typically provided with small keypads, which are not ergonomically optimal. When a user browses through a list of a mobile communication device such as a functional menu or a telephone book listing, he usually has to press many keys to reach his desired entry.

Even if every menu structure implemented in a mobile communication device is chosen based on the consideration of the most commonly used functions, no menu structure perfectly matches each individual behavior of a respective user, and for less frequently used functions many key strokes are still needed.

Furthermore, certain operations, such as delete operations, are intended to be used carefully and are therefore normally not placed as the first item in a menu. Consequently, a user has to scroll down the menu until he finds the delete function for selecting. This again results in a relatively large amount of key presses.

Accordingly, what is needed in the art is a new approach to menu accessibility that substantially avoids the problems or drawbacks of the prior art as discussed above and in particular yields a method and mobile communication device that enables a user to make a selection from a list of items with a minimum of input actions.

### SUMMARY OF THE PRESENT INVENTION

To address the above-discussed deficiencies of the prior art, the present invention provides, in one aspect, a method of displaying information on a display of a mobile communication device. In one embodiment, the method includes: (1) causing at least some of the information to be displayed on the display and (2) scrolling automatically through the information as a function of time.

In another aspect, the present invention provides a mobile communication device. In one aspect, the mobile communication device includes: (1) an input configured to receive user commands, (2) a display for displaying information, (3) a displayer configured to cause the information to be displayed on the display and (4) an item designator coupled to the displayer and configured to scroll automatically through the information as a function of time.

The foregoing has outlined preferred and alternative features of the present invention so that those skilled in the art may better understand the detailed description of the present invention that follows. Additional features of the present invention will be described hereinafter that form the subject of the claims of the present invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the present invention.

### BRIEF DESCRIPTION OF THE DRAWINGS

For a more complete understanding of the present invention, reference is now made to the following descriptions taken in conjunction with the accompanying drawing, in which:

FIGURE 1 illustrates a schematic view of a mobile communication device having an automatic scrolling capability constructed according to the principles of the present invention;

FIGURE 2 illustrates a high level block diagram of one embodiment of the communication device of FIGURE 1;

FIGURE 3A illustrates a display of the mobile communication device of FIGURE 1 showing a menu with the first menu item highlighted;

FIGURE 3B illustrates the display of FIGURE 3A after an automatic scroll step resulting in the second menu item being highlighted;

FIGURE 3C illustrates the display of FIGURE 3A after several automatic scroll steps with the ninth menu item being highlighted; and

FIGURE 4 illustrates a flow diagram of a method of performing automatic scrolling carried out according to the principles of the present invention.

### DETAILED DESCRIPTION

Before describing the FIGUREs directly, various aspects, embodiments and features of the present invention will be described. Accordingly, one aspect of the present invention is directed to a method for displaying information on the display of a mobile communication device, wherein the display of the information is automatically scrolled.

The automatic scrolling function of the present invention provides added convenience for the user of a mobile communication device when reading displayed information, especially text messages such as, for example, a received short message according to the Short Messaging Service (SMS) standard.

The inventive method is especially advantageous for displaying text information that includes a list of items such as, for example, a functional menu of the mobile communication device, a telephone book listing or a list of stored pictures or sounds in a file folder, from which the user needs to select an item.

According to the automatic scrolling of the present invention, when the user enters a list, he does not have to manually scroll down until he reaches his desired entry. Instead, he has simply to wait until the list automatically scrolls to the desired entry, at which time he selects it. As a result, the number of keystrokes required to select a desired entry is significantly reduced. The automatic scrolling speed may be user-adjustable, so that the user can specify the speed of the automatic scrolling according to his preference.

Scrolling with respect to a list, several items of which can be displayed simultaneously on a display, may include consecutive highlighting of the displayed list items as well as shifting the position of list entries on the display. Shifting the position of the list entries on the display may include shifting of list entries into the display on one side and shifting of list entries out of the display on the opposite side.

Since a user may not prefer automatic scrolling at all times or for all lists accessible on a mobile communication device, the described automatic scrolling may be selectably user-activatable. Depending upon user preferences, the automatic scrolling may be started upon entry of a menu, a user-selectable delay time after entry of a menu or in response to a predetermined user input. Depending upon the kind of information to be displayed, the display of the information may be automatically scrolled in either a vertical or horizontal direction.

Another aspect of the present invention is directed to a mobile communication device configured to carry out one or more of the methods described above. As such, the mobile communication device may include an input device configured to allow a user to provide user commands and a visual output configured to display information, in particular text information, wherein the device is adapted automatically to scroll the display of the information.

Typically, the user interface of a mobile communication device includes many lists through which the user must scroll. Many menus may include lists of items, wherein each entry can be associated with a sub-menu, i.e., a subordinate list. The menu structure of a mobile communication device can have several of such hierarchy levels.

In one embodiment of the present invention, whenever a list on any hierarchy level is entered, the list automatically scrolls. In such embodiment, the user has only to press a select key when his entry is in focus or highlighted. Accordingly, when the information to be displayed is a menu, which includes a list of user-selectable menu items, the automatic scrolling may include consecutive highlighting of the menu items.

For user convenience, the mobile communication device may include means for adjusting the automatic scrolling speed depending upon user input. Further, the mobile communication device may be configured to start the automatic scrolling upon entry of a menu, a user-selectable delay time after entry of a menu or in response to user input. The user may choose different settings for different menus. The mobile communication device may be configured automatically to scroll the display of information in a vertical or horizontal direction.

The mobile communication device may be provided with a microprocessor having at least one associated memory unit. In such device, software may be employed to advantage to carry out one or more of the methods described above. Implementation in software is flexible relative to implementation in hardware.

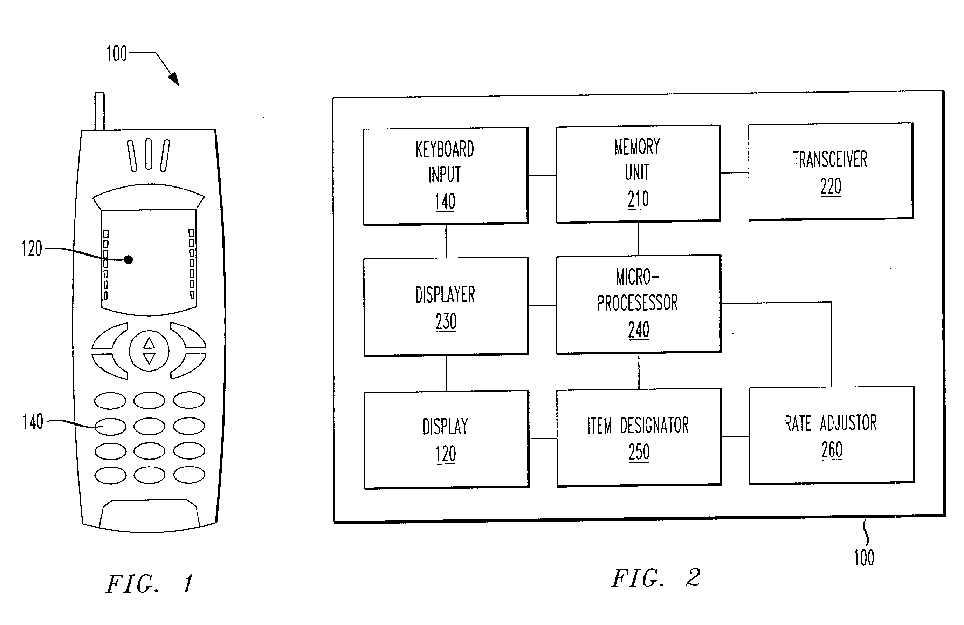

Referring initially to FIGURE 1, illustrated is a schematic view of a mobile communication device 100 having an automatic scrolling capability in accordance with the principles of the present invention. The mobile communication device 100 has a display 120 and a keyboard input 140. The display 120 is configured to display menus or lists through which a user ostensibly must navigate. The keyboard input 140 allows the user to select menu or list items.

Turning now to FIGURE 2, illustrated is a high level block diagram of one embodiment of the mobile communication device 100 of FIGURE 1. The mobile communication device 100 illustrates the display 120 and keyboard input 140 of FIGURE 1. The mobile communication device 100 further includes a memory unit 210, a transceiver 220, a displayer 230, a micro-processor 240, an item designator 250 and a rate adjustor 260. The displayer 230, item designator 250 and rate adjustor 260 are shown in FIGURE 2 as separate functional blocks and may be embodied in dedicated hardware in certain embodiments.

The memory unit 210 and the micro-processor 220 cooperate to store and execute sequences of software instructions, which may include one or more sequences to carry out the functions of the displayer 230, item designator 250 and rate adjustor 260 in certain alternative embodiments.
The displayer 230 is configured to cause the information to be displayed on the display 120. The item designator 250 is configured to scroll automatically through the information as a function of time. The item designator 250 may start the scrolling upon entry of a particular menu, upon expiration of a user-selectable delay time after entry of the menu or upon receipt of user input. The rate adjustor 260 is configured to adjust a rate of the scrolling depending on user input. The keyboard input 140 allows the user to adjust the rate of the scrolling and to make menu selections of highlighted items, as described above.

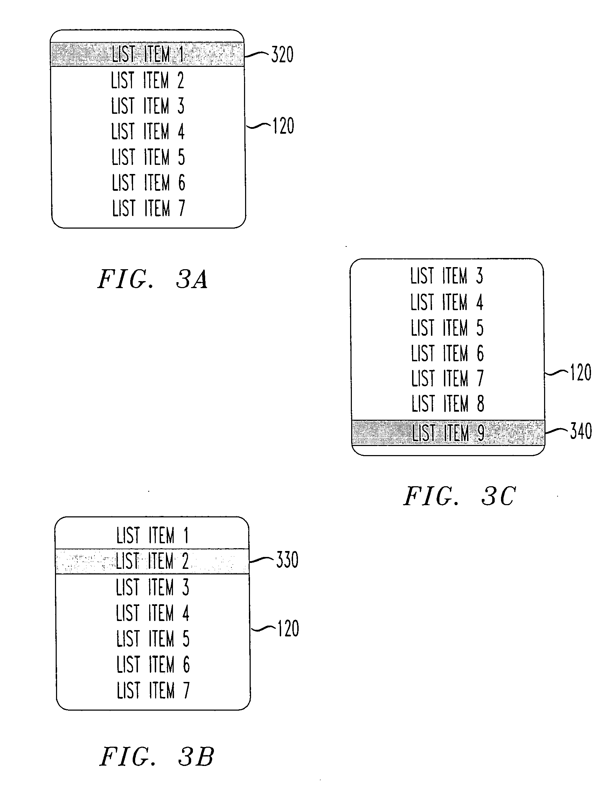

Turning now to FIGURE 3A, illustrated is the display 120 of the mobile communication device 100 of FIGURE 1 displaying a list of items. In the illustrated embodiment of the display 120, seven list entries fit into the display 120 when vertically arranged. The list of items represents, for example, a menu of functional settings or telephone book entries. Upon entering the list, a first item 320 in the list is highlighted. In the illustrated embodiment, upon entering a list accessible via the user interface of the mobile communication device, the list automatically starts to scroll. Accordingly, as shown in FIGURE 3B, after an interval of time, depending upon the selected automatic scrolling speed, an automatic scroll step is performed, causing a consecutive item 330 in the list to be highlighted. As shown in FIGURE 3C, when the end of the display 120 is reached, the position of the list items on the display 120 is shifted, thereby deleting the uppermost list item and displaying a subsequent item 340 previously not displayed. Since the subsequent item 340 is the next consecutive list item, it is highlighted in FIGURE 3C.

To select an item from the list, the user presses the select key, when his desired item is highlighted. For the case that the user misses the right moment to press the select key, advantageously the first list item is highlighted again after the last item, thereby creating a scrolling loop and giving the user further opportunity to select his desired list item. To avoid this, the automatic scrolling speed advantageously can be adjusted to user preferences.

Using conventional devices, the user has to press a "down" key five times on average in a typical list containing about 10 entries to reach his desired entry and then press a "select" key. Especially on mobile communication devices, users prefer to press as few keys as possible, which is one of the reasons why predictive text engines are so successful. Due to the automatic scrolling of this invention a user has to press only one key once for selecting a list entry.

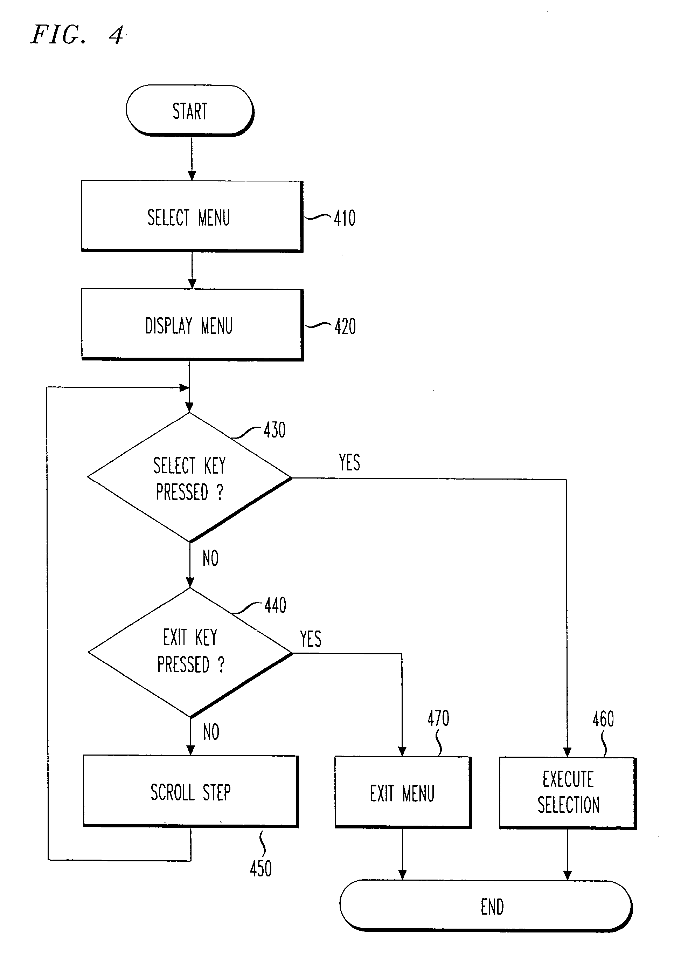

Turning now to FIGURE 4, illustrated is a flow diagram of a method of performing automatic scrolling carried out according to the principles of the present invention. In this embodiment, the method includes displaying on the display of a mobile telephone a menu which includes a list of user-selectable menu items and selecting at least one of the menu items by a user. First, the user selects a,menu, for example a menu for adjusting the telephone settings of the mobile telephone. The menu entries of the selected menu are then displayed on the display of the mobile telephone in a list with the first menu entry highlighted as shown in FIGURE 3A. It is then determined whether the user has pressed a select key 430 and, if not, whether the user has pressed an exit key 440. If the user has pressed neither of these two keys, a scroll step 450 is automatically performed by highlighting the next menu entry and if necessary shifting the position of the displayed menu entries as described above. After each scroll step, the key input is checked again. If the select key is pressed, the corresponding selection is executed 460, for example a setting is activated or a sub-menu is displayed. If the exit key is pressed, the selecting process is aborted and the menu is exited 470, displaying for example an upper-level menu or the main display of the mobile telephone's user interface.

Although the present invention has been described in detail, those skilled in the art should understand that they can make various changes, substitutions and alterations herein without departing from the spirit and scope of the present invention in its broadest form.

## Claims

1. A method of displaying information on a display of a mobile communication device, comprising:
causing at least some of said information to be displayed on said display; and
scrolling automatically through said information as a function of time.

2. A mobile communication device, comprising:
an input configured to receive user commands;
a display for displaying information;
a displayer configured to cause said information to be displayed on said display; and
an item designator coupled to said displayer and configured to scroll automatically through said information as a function of time.

3. The mobile communication device as recited in Claim 2 further comprising a rate adjustor coupled to said item designator and configured to adjust a rate of said scrolling depending on user input.

4. The mobile communication device as recited in Claim 2 wherein said information is a text message.

5. The mobile communication device as recited in Claim 4 wherein said text message is a Short Message System message.

6. The mobile communication device as recited in Claim 2 wherein said information is a menu including a list of user-selectable menu items.

7. The mobile communication device as recited in Claim 2 wherein said item designator consecutively highlights lines of said information.

8. The mobile communication device as recited in Claim 6 wherein said item designator starts said scrolling upon one selected from the group consisting of:
entry of said menu,
expiration of a user-selectable delay time after entry of said menu, and
receipt of user input.

9. The mobile communication device as recited in Claim 2 wherein said item designator performs said scrolling in a selected one of:
a vertical direction, and
a horizontal direction.

10. The mobile communication device as recited in Claim 2 wherein said displayer and said item designator are embodied in a sequence of software instructions.
